# EUROPEAN PATENT APPLICATION

(11) **EP 4 789 595 A1**
(43) Date of publication of application: **12.08.2026**
(21) Application number: 25156680.8
(22) Date of filing: 07.02.2025
(51) Int. Cl.: A47J 47/10, B65D 51/16, B65D 81/20, A47J 47/02

(54) **RESEALABLE FOOD STORAGE CONTAINER AND COVER MECHANISM THEREOF**

(71) Applicant: Freshlink Product Development, LLC, Ridgefield Park, NJ 07660 (US)
(72) Inventor: TSENG, Yi-Feng, 112018 Taipei City (TW); LAI, Yi-Cheng, 104055 Taipei City (TW); YANG, Yu-Hui, 220053 New Taipei City (TW)
(74) Representative: Mewburn Ellis LLP

(57) **Abstract**

A resealable food storage container includes a container body (1) and a cover mechanism (2) having a cover unit (20) and a lift operating member (3) which is pivotably disposed on the cover unit (20) and has an operating portion (31) and an abutting portion (32) extending diametrically opposite to each other. The lift operating member is operably shiftable relative to the cover unit between a closed position, where the abutting portion (32) is interposed between the cover unit (20) and the container body (1), and an opened position, where an airtight ring (22) of the cover unit (20) is removed upwardly from the container body (1). During rotation to the opened position, the abutting portion (32) abuts downwardly against the container body (1) to turn and lift the lift operating member (3) upwardly so as to remove upwardly the airtight ring (22) from the container body (1).

## Description

The disclosure relates to a food storage container, and more particularly to a resealable food storage container with a cover mechanism sealing a container body thereof.

For preserving food, a resealable food storage box is often used for disposing the food therein to isolate the food from external air so as to prevent bacteria from growing and any contact with foreign objects.

A conventional resealable food storage container generally has a container body and a lid attached to the container body in an airtight manner. The lid has a plurality of snap locks which are operated downwardly to fasten the cover to the container body. When opening the container, the snap locks are operated upwardly and individually to be removed from the container body to permit separation of the lid from the container body. The operation is inconvenient.

Therefore, an object of the disclosure is to provide a resealable food storage container and a cover mechanism thereof that can alleviate at least one of the drawbacks of the prior art.

According to an aspect of the disclosure, there is provided a resealable food storage container according to claim 1.

According to an aspect of the disclosure, there is provided a cover mechanism according to claim 8.

With the lift operating member, the cover mechanism may be operated with a single hand for easy opening and closure of the cover mechanism, thereby rendering the resealable food storage container easy to use.

Other features and advantages of the disclosure will become apparent in the following detailed description of the embodiments with reference to the accompanying drawings. It is noted that various features may not be drawn to scale.
FIG. 1 is an exploded perspective view illustrating an embodiment of a resealable food storage container according to the disclosure.
FIG. 2 is a sectional view of the embodiment, illustrating a state when a lift operating member is in a closed position.
FIG. 3 is a fragmentary sectional view of the embodiment.
FIG. 4 is a perspective view illustrating a first check valve of the embodiment.
FIG. 5 is a fragmentary sectional view of the embodiment, illustrating a state when a valve disc of the first check valve is in a non-sealing position.
FIG. 6 is a fragmentary sectional view of the embodiment, illustrating a state when the lift operating member is in an opened position.
FIG. 7 is an exploded perspective view illustrating another embodiment of a resealable food storage container according to the disclosure.
FIG. 8 is a sectional view of the embodiment adapted to be connected with an air pumping device.
FIG. 9 is a perspective view illustrating a second check valve of the embodiment.
FIG. 10 is a fragmentary sectional view of the embodiment, illustrating a state when a valve disc of the second check valve is in a non-sealing position.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

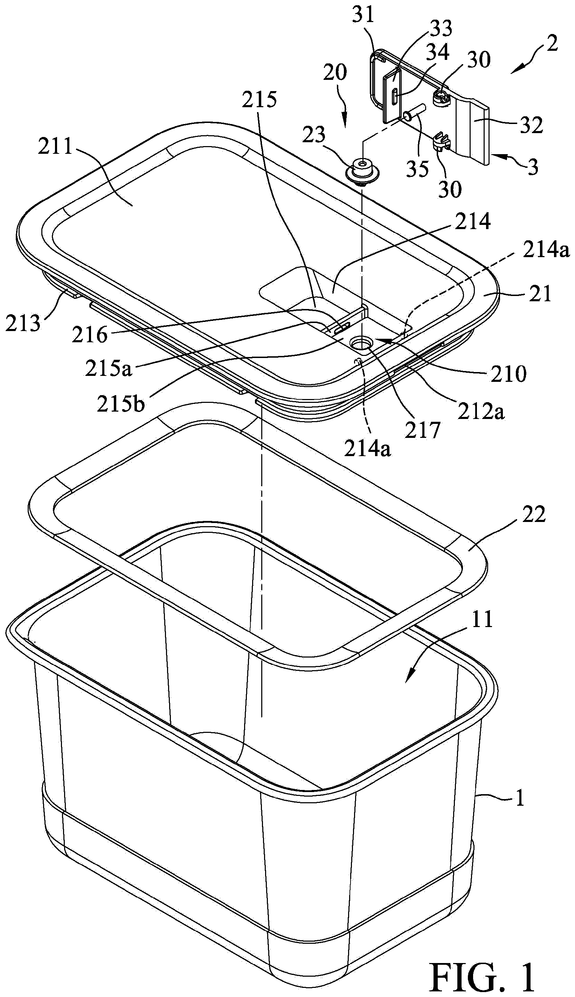

Referring to FIGS. 1, 2 and 3, an embodiment of a resealable food storage container according to the disclosure includes a container body 1 having a surrounding wall 12 which extends upwardly to terminate at an upper edge 15 and which defines a container space 11 therein that opens upwardly, and a cover mechanism 2.

The cover mechanism 2 includes a cover unit 20 which is attached to the upper edge 15 to seal the container space 11 in an airtight manner, and a lift operating member 3 which is pivotably disposed on the cover unit 20 about a pivot axis. The cover unit 20 has a cover body 21, an airtight ring 22 which is disposed on the cover body 21, and a first check valve 23 which is disposed on the lift operating member 3.

The cover body 21 has an upper wall 211, an outer peripheral wall 212 extending downwardly from an outer periphery of the upper wall 211, an annular engaging flange 213 extending radially and outwardly from a lower end of the outer peripheral wall 212, an inner peripheral wall 214 extending downwardly from an inner periphery of the upper wall 211, and a recessed bottom wall 215 connected with a lower end of the inner peripheral wall 214 to cooperatively define an operating space 210.

The outer peripheral wall 212 has a notch 212a formed therethrough to be in communication with the operating space 210. The inner peripheral wall 214 has two pivot axle portions 214a protruding from an inner peripheral surface thereof and spaced apart from each other. The recessed bottom wall 215 has a horizontal wall portion 215b and an upright wall portion 215a extending uprightly from the horizontal wall portion 215b and formed opposite to the notch 212a. The upright wall portion 215a has an engaging slot 216 formed in a side surface thereof opposite to the notch 212a. A first vent hole 217 is formed in and through the horizontal wall portion 215b.

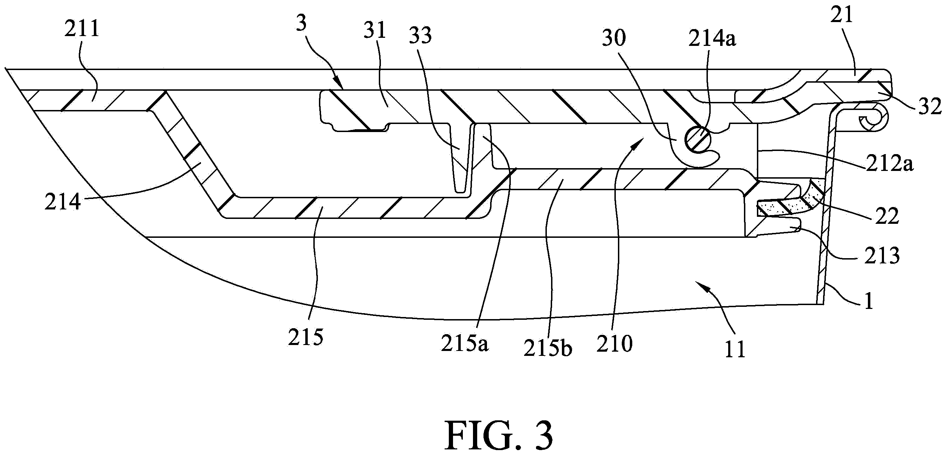

The airtight ring 22 is made of a soft silicone rubber material, and is engaged with the annular engaging flange 213 to be interposed between the cover body 21 and the surrounding wall 12 of the container body 1 (see FIG. 3).

The lift operating member 3 is disposed in the operating space 210, and has two pivot lugs 30 which are respectively and pivotably connected with the pivot axle portions 214a to define the pivot axis of the lift operating member 3, an operating portion 31 and an abutting portion 32 which extend diametrically opposite to each other from the pivot lugs 30. The lift operating member 3 further has a downwardly extending portion 33 which extends downwardly from the operating portion 31, an engaging protrusion 34 which protrudes from the downwardly extending portion 33 toward the abutting portion 32, and a valve mounting portion 35 which extends downwardly from the operating portion 31. The abutting portion 32 is disposed in the notch 212a. The valve mounting portion 35 is formed between the downwardly extending portion 33 and the pivot lugs 30 for the first check valve 23 to be mounted thereon.

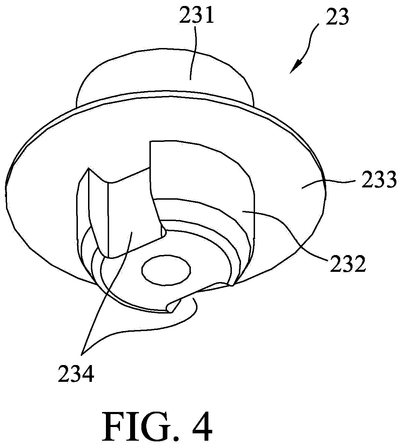

With reference to FIGS. 1 and 2 and FIG. 4, the first check valve 23 is in the form of a single piece, and has a valve connecting portion 231 and a plug portion 232 which are sleeved on the valve mounting portion 35 to be securely connected with the operating portion 31, and a valve disc 233 which extends radially and outwardly from a lower end of the valve connecting portion 231. The plug portion 232 extends downwardly from the valve disc 233, and has two first notched passages 234 which extend downwardly from the valve disc 233 therethrough to be in communication with the first vent hole 217 when the plug portion 232 is inserted into the first vent hole 217. In other embodiment, only one first notched passage 234 is formed in the plug portion 232.

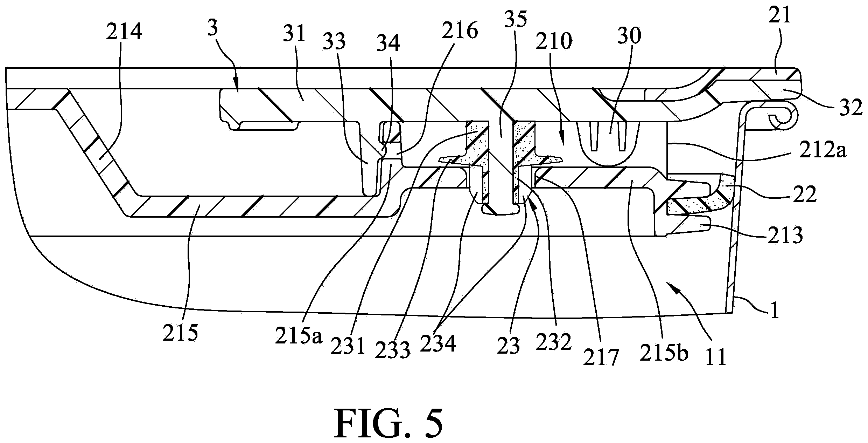

With reference to FIGS. 1 and 2 and FIG. 5, the cover mechanism 2 is removably mounted on the container body 1 to downwardly cover the container space 11 in an airtight manner. During the downward covering of the cover unit 20 on the container body 1, a positive pressure air is generated in the container space 11 to urge the valve disc 233 of the first check valve 23 to deform and flap upwardly so as to open upper ends of the first notched passages 234 such that the container space 11 is in communication with an external environment through the first notched passages 234 and the first vent hole 217. The valve disc 233 of the first check valve 23 is returned to its original shape to be attached to the upper surface of the upper wall 211 when air pressure in the container space 11 is the same as the external environment so as to prevent outside air and foreign objects from entering the container space 11.

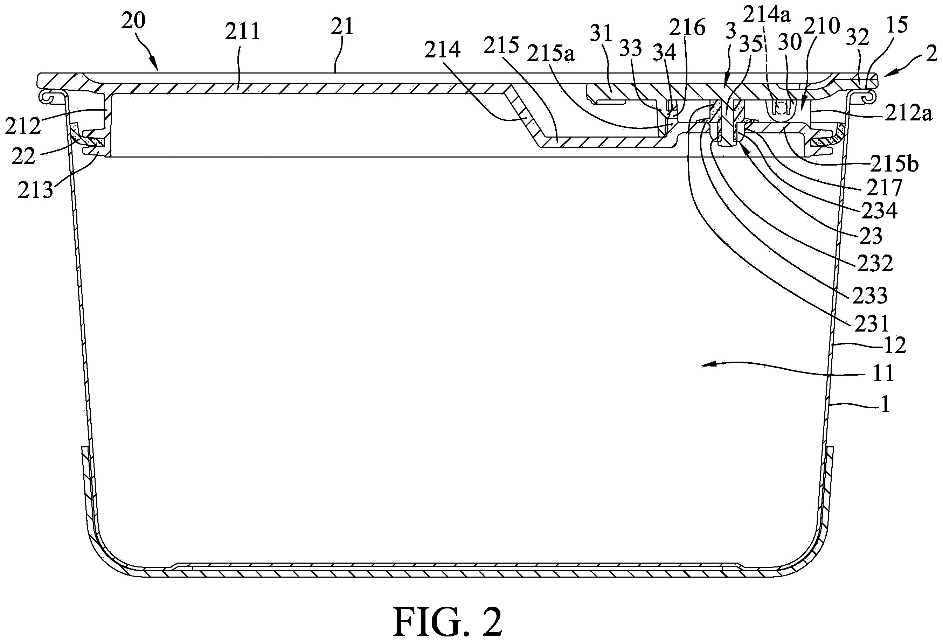

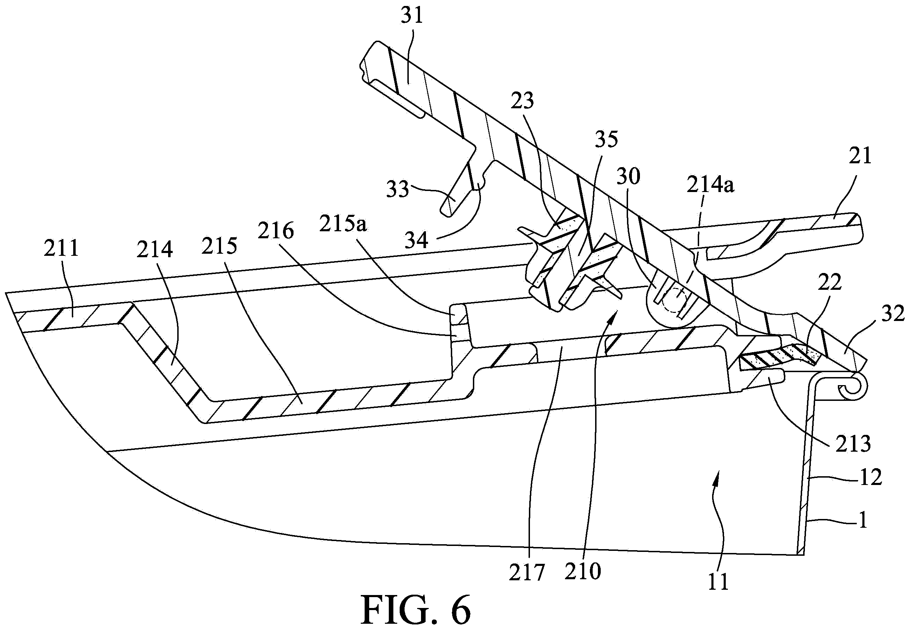

With reference to FIGS. 1 and 2 and FIG. 6, when opening the food storage container, the lift operating member 3 is operated relative to the cover body 21 to shift from a closed position (as shown in FIG. 2) to an opened position (as shown in FIG. 6). In the closed position, the abutting portion 32 of the lift operating member 3 is disposed in the notch 212a and is interposed between the cover body 21 and the upper edge 15 of the container body 1, and the operating portion 31 abuts downwardly against the upright wall portion 215a, as shown in FIG. 3. Meanwhile, as shown in FIG. 2, the engaging protrusion 34 is engaged in the engaging slot 216, the plug portion 232 of the first check valve 23 is inserted downwardly into the first vent hole 217, and the valve disc 233 downwardly covers the first vent hole 217 in an airtight manner. In the embodiment, the abutting portion 32 is sandwiched between the cover body 21 and the container body 1.

When the operating portion 31 of the lift operating member 3 is lifted relative to the cover body 21 of the cover unit 20 to rotate about the pivot axis, the abutting portion 32 of the lift operating member 3 abuts downwardly against the upper edge 15 of the container body 1 serving as a fulcrum, and the lift operating member 3 is turned and lifted upwardly relative to the cover body 21 to the opened position so as to remove upwardly the first check valve 23 from the first vent hole 217, and to bring the cover body 21 to turn relative to the container body 1 about a fulcrum at a side opposite to the notch 212a so as to remove upwardly the airtight ring 22 from the surrounding wall 12 of the container body 1. At this stage, by further lifting the lift operating member 3 with the user's hand, the cover mechanism 2 is removed from the container body 1. As compared with the conventional food storage container, it is convenient for the user to open the resealable food storage container of the disclosure with a single hand.

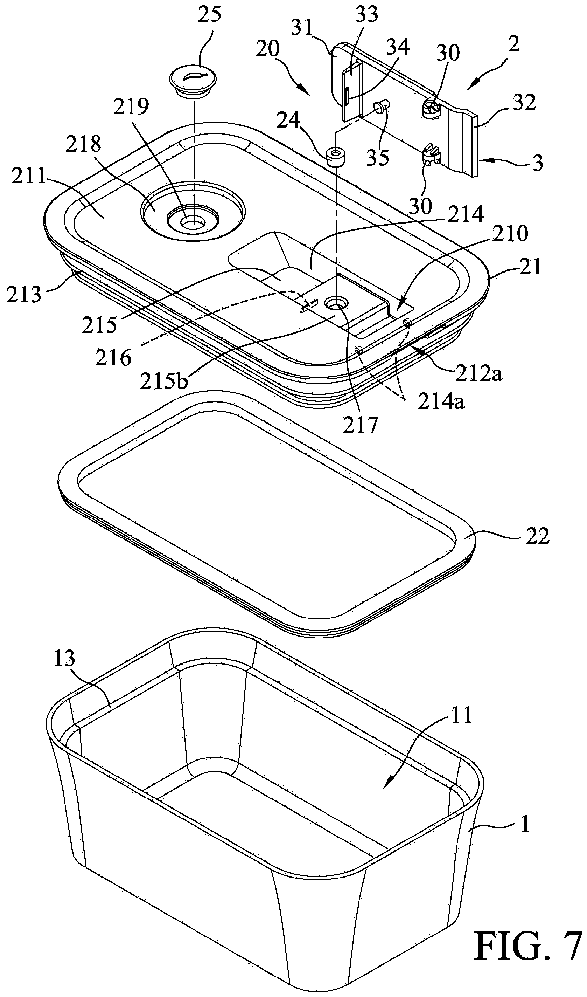

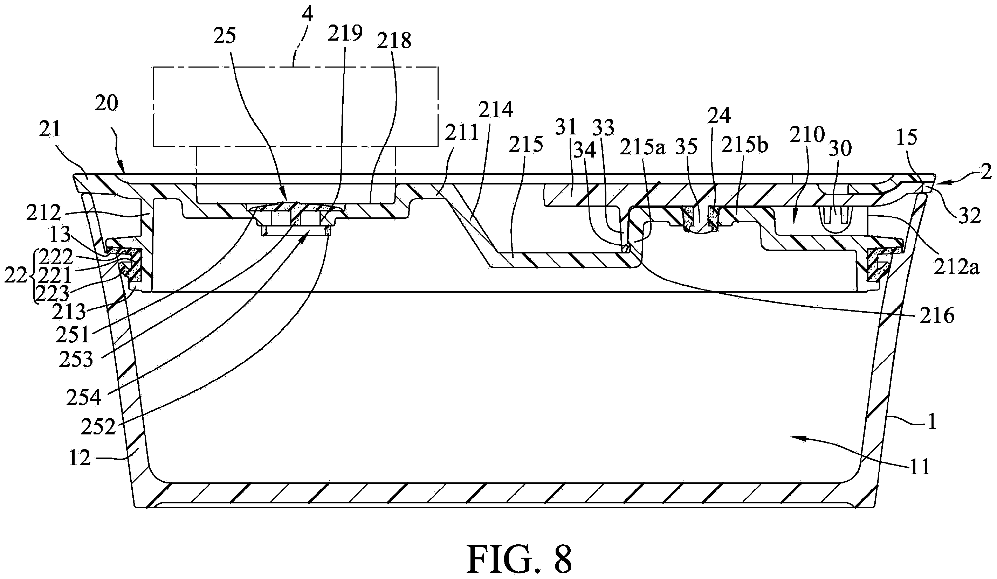

Referring to FIGS. 7 and 8, in another embodiment, the resealable food storage container is adapted for connecting with an air pumping device 4.

The container body 1 has an abutting edge 13 formed on the inner surface of the surrounding wall 12 and adjacent to the upper edge 15. The airtight ring 22 includes a sleeve portion 221 sleeved on the outer peripheral wall 212 of the cover body 21, an upper ring portion 222 and a lower ring portion 223 respectively formed at upper and lower ends of the sleeve portion 221 and spaced apart from each other. The upper ring portion 222 and the lower ring portion 223 extend from the sleeve portion 221 to be in abutting engagement respectively with the abutting edge 13 and the inner surface of the surrounding wall 12.

Instead of having the first check valve 23, the cover mechanism 2 includes an airtight plug 24 disposed on the operating portion 31 of the lift operating member 3. When the lift operating member 3 is in the closed position, as shown in FIG. 8, the airtight plug 24 is inserted into and seals the first vent hole 217 in an airtight manner. During shifting of the lift operating member 3 from the closed position to the opened position, the airtight plug 24 is brought to be removed upwardly from the first vent hole 217.

The cover body 21 further has a connecting portion 218 for connecting with the air pumping device 4, and a second vent hole 219 which extends downwardly through the connecting portion 218 to be in communication with the container space 11 of the container body 1. The cover mechanism 2 further includes a second check valve 25 disposed on the cover body 21. In the embodiment, the connecting portion 218 is recessed from the upper wall 211. In other embodiments, the connecting portion 218 may protrude from the upper wall 211, and is connected with the air pumping device 4 in a detachably engaging and airtight manner.

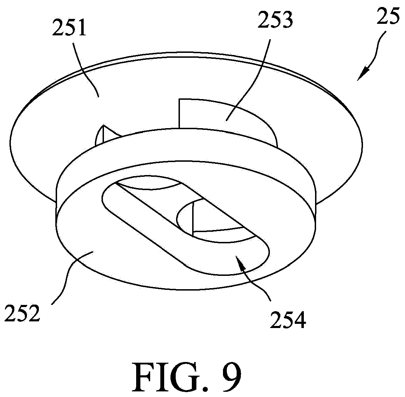

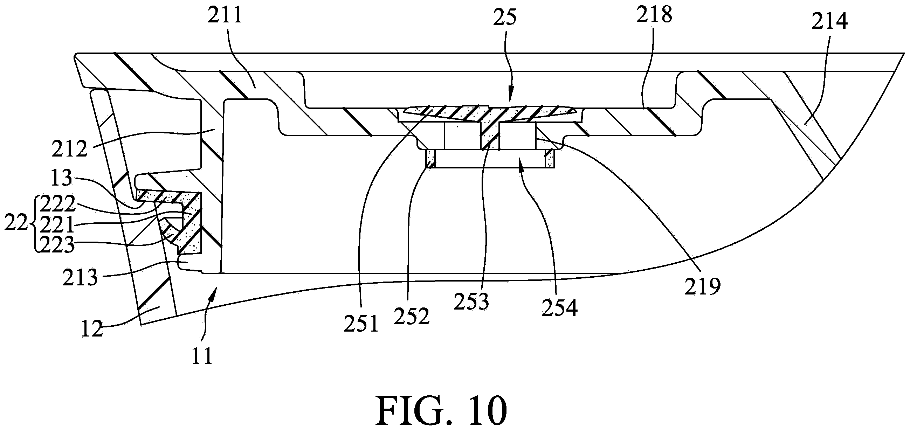

With reference to FIG. 7 and FIGS. 9 and 10, the second check valve 25 has a valve disc 251 which is configured to downwardly abut against an upper surface of the connecting portion 218 and cover the second vent hole 219 in an airtight manner, a lower plate 252 which is disposed downwardly of the valve disc 251 to abut against a lower surface of the connecting portion 218, and an interconnecting stem 253 which extends to interconnect the valve disc 251 and the lower plate 252 and is inserted into the second vent hole 219. A second notched passage 254 is formed in the lower plate 252 and the interconnecting stem 253 and is configured to be in communication between the second vent hole 219 and the container space 11. The valve disc 251 is deformed and flapped upwardly by means of a negative pressure air in the container space 11 generated as a result of pumping by the air pumping device 4, or a positive pressure air from the container space 11 when the cover unit 21 covers the container body 1 downwardly, so as to open the second vent hole 219 to communicate the second vent hole 219 with the container space 11 and to communicate the container space 11 with the external environment.

In use, the air pumping device 4 is connected and used with the embodiment to draw most air in the container space 11 out so as to keep the food in the container space 11 fresh for longer.

As compared to the conventional food storage container which requires manual operation of the sealing members thereof (such as valve disc, plug, etc.) to open the container, the resealable food storage container of the disclosure has the lift operating member 3 which may remove the first check valve 23 (in one embodiment) or the airtight plug 24 (in another embodiment) from the first vent hole 217 during the opening of the cover mechanism 2, which may reduce breaking of the components so as to extend the service life of the container. Additionally, when the resealable food storage container is put in a microwave oven for heating without the cover mechanism 2 being removed from the container body 1, water vapor and air expanded during the heating process may pass through the first check valve 23 or the second check valve 25, making the resealable food storage container convenient to use.

As illustrated, with the lift operating member 3, the cover mechanism 2 may be operated with a single hand for easy opening and closure of the cover mechanism 2, thereby rendering the resealable food storage container convenient to use.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A resealable food storage container, comprising:
a container body (1) having a surrounding wall (12) which extends upwardly to terminate at an upper edge (15) and which defines a container space (11) therein that opens upwardly; and
a cover mechanism (2) including a cover unit (20) which is attached to said upper edge (15) to seal said container space (11) in an airtight manner, **characterized in that**:
said cover mechanism (2) further includes a lift operating member (3) which is pivotably disposed on said cover unit (20) about a pivot axis, said cover unit (20) having a cover body (21) and an airtight ring (22) which is disposed on said cover body (21) and interposed between said cover body (21) and said surrounding wall (12), said lift operating member (3) having an operating portion (31) and an abutting portion (32) which extend diametrically opposite to each other from said pivot axis;
wherein, with rotation of said lift operating member (3) about said pivot axis, said lift operating member (3) is operably shiftable relative to said cover unit (20) between a closed position, where said abutting portion (32) is interposed between said cover body (21) and said upper edge (15), and an opened position, where said airtight ring (22) is removed upwardly from said surrounding wall (12), and during the rotation of said lift operating member (3) from the closed position to the opened position by upwardly operating said operating portion (31), said abutting portion (32) abuts downwardly against said upper edge (15) serving as a fulcrum, and said lift operating member (3) is turned and lifted upwardly relative to said cover body (21) so as to remove upwardly said airtight ring (22) from said container body (1).

2. The resealable food storage container of claim 1, wherein said cover mechanism (2) further includes a first check valve (23) disposed on said operating portion (31) of said lift operating member (3), said cover body (21) having a first vent hole (217) which extends through an upper wall (211) of said cover body (21) to be in communication with said container space (11), wherein said first check valve (23) is disposed to seal said first vent hole (217) in an airtight manner when said lift operating member (3) is in the closed position; during shifting of said lift operating member (3) from the closed position to the opened position, said first check valve (23) is brought to be removed upwardly from said first vent hole (217); and, when said first check valve (23) is brought to close said first vent hole (217), a positive pressure air flows upwardly from said container space (11) through said first vent hole (217) to urge and open said first check valve (23).

3. The resealable food storage container of claim 2, wherein said first check valve (23) has a valve connecting portion (231) which is securely connected with said operating portion (31), and a valve disc (233) which extends radially and outwardly from said valve connecting portion (231) to downwardly cover said first vent hole (217) in an airtight manner, said valve disc (233) being deformed and flapped upwardly by means of the positive pressure air from said container space (11) so as to communicate said first vent hole (217) with said container space (11).

4. The resealable food storage container of claim 3, wherein said first check valve (23) further has a plug portion (232) which extends downwardly from said valve disc (233), said plug portion (232) having at least one first notched passage (234) which extends downwardly from said valve disc (233) therethrough and is in communication with said container space (11), said plug portion (232) being configured to be inserted downwardly into said first vent hole (217) such that, when said valve disc (233) is deformed and flapped upwardly, said container space (11) is in communication with an external environment through said first notched passage (234).

5. The resealable food storage container of claim 1, wherein said cover mechanism (2) further includes an airtight plug (24) disposed on said operating portion (31) of said lift operating member (3), said cover body (21) having a first vent hole (217) which extends through an upper wall (211) of said cover body (21) to be in communication with said container space (11), wherein said airtight plug (24) is disposed to be inserted into and seal said first vent hole (217) in an airtight manner when said lift operating member (3) is in the closed position; and, during shifting of said lift operating member (3) from the closed position to the opened position, said airtight plug (24) is brought to be removed upwardly from said first vent hole (217).

6. The resealable food storage container of any one of claims 1 to 5, adapted for connecting with an air pumping device (4), wherein said cover body (21) has a connecting portion (218) for connecting with the air pumping device (4), and a second vent hole (219) which extends downwardly through said connecting portion (218) to be in communication with said container space (11);
said cover mechanism (2) further including a second check valve (25) disposed on said cover body (21) to operably seal said second vent hole (219) in an airtight manner such that said second check valve (25) is operably and upwardly driven to an opened position, where air in said container space (11) is permitted to flow through said second vent hole (219), by either one of a negative pressure air applied to said connecting portion (218) by the air pumping device (4), or a positive pressure air flowing upwardly from said container space (11) through said second vent hole (219).

7. The resealable food storage container of claim 6, wherein said second check valve (25) has a valve disc (251) which is configured to downwardly abut against an upper surface of said connecting portion (218) and cover said second vent hole (219) in an airtight manner, a lower plate (252) which is disposed downwardly of said valve disc (251) to abut against a lower surface of said connecting portion (218), an interconnecting stem (253) which extends to interconnect said valve disc (251) and said lower plate (252) and is inserted into said second vent hole (219), and a second notched passage (254) which is formed in said lower plate (252) and said interconnecting stem (253) and in communication between said second vent hole (219) and said container space (11), said valve disc (251) being deformed and flapped upwardly by means of either the negative pressure air or the positive pressure air so as to open said second vent hole (219) to communicate said second vent hole (219) with said container space (11).

8. A cover mechanism (2) for mounting on an upper edge (15) of a surrounding wall (12) of a container body (1) of a resealable food storage container to seal a container space (11) defined by the surrounding wall (12), comprising:
a cover unit (20) which is attached to the upper edge (15) of the container body (1) to seal the container space (11) in an airtight manner, said cover unit (20) including a cover body (21) and an airtight ring (22) which is disposed on said cover body (21) and interposed between said cover body (21) and the surrounding wall (12) of the container body (1), **characterized by** further comprising:
a lift operating member (3) which is pivotably disposed on said cover unit (20) about a pivot axis, said lift operating member (3) including an operating portion (31) and an abutting portion (32) which extend diametrically opposite to each other from said pivot axis;
wherein, with rotation of said lift operating member (3) about said pivot axis, said lift operating member (3) is operably shiftable relative to said cover unit (20) between a closed position, where said abutting portion (32) is interposed between said cover body (21) and the upper edge (15) of the container body (1), and an opened position, where said airtight ring (22) is removed upwardly from the surrounding wall (12) of the container body (1), and during the rotation of said lift operating member (3) from the closed position to the opened position by upwardly operating said operating portion (31), said abutting portion (32) abuts downwardly against the upper edge (15) serving as a fulcrum, and said lift operating member (3) is turned and lifted upwardly relative to said cover body (21) so as to remove upwardly said airtight ring (22) from the container body (1).

9. The cover mechanism (2) of claim 8, further comprising a first check valve (23) disposed on said operating portion (31) of said lift operating member (3), said cover body (21) having a first vent hole (217) which extends through an upper wall (211) of said cover body (21) to be in communication with the container space (11) of the container body (1), wherein said first check valve (23) is disposed to seal said first vent hole (217) in an airtight manner when said lift operating member (3) is in the closed position; during shifting of said lift operating member (3) from the closed position to the opened position, said first check valve (23) is brought to be removed upwardly from said first vent hole (217); and, when said first check valve (23) is brought to close said first vent hole (217), a positive pressure air flows upwardly from said container space (11) through said first vent hole (217) to urge and open said first check valve (23).

10. The cover mechanism (2) of claim 9, wherein said first check valve (23) has a valve connecting portion (231) which is securely connected with said operating portion (31), and a valve disc (233) which extends radially and outwardly from said valve connecting portion (231) to downwardly cover said first vent hole (217) in an airtight manner, said valve disc (233) being deformed and flapped upwardly by means of the positive pressure air from the container space (11) so as to communicate said first vent hole (217) with the container space (11).

11. The cover mechanism (2) of claim 10, wherein said first check valve (23) further has a plug portion (232) which extends downwardly from said valve disc (233), said plug portion (232) having at least one first notched passage (234) which extends downwardly from said valve disc (233) therethrough and in communication with the container space (11), said plug portion (232) being configured to be inserted downwardly into said first vent hole (217) such that, when said valve disc (233) is deformed and flapped upwardly, said first notched passage (234) is in communication with an external environment.

12. The cover mechanism (2) of claim 8, further comprising an airtight plug (24) disposed on said operating portion (31) of said lift operating member (3), said cover body (21) having a first vent hole (217) which extends through an upper wall (211) of said cover body (21) to be in communication with the container space (11) of the container body (1), wherein said airtight plug (24) is disposed to be inserted into and seal said first vent hole (217) in an airtight manner when said lift operating member (3) is in the closed position; and, during shifting of said lift operating member (3) from the closed position to the opened position, said airtight plug (24) is brought to be removed upwardly from said first vent hole (217).

13. The cover mechanism (2) of any one of claims 8 to 12, adapted for connecting with an air pumping device (4), wherein said cover body (21) has a connecting portion (218) for connecting with the air pumping device (4), and a second vent hole (219) which extends downwardly through said connecting portion (218) to be in communication with the container space (11) of the container body (1);
said cover mechanism (2) further including a second check valve (25) disposed on said cover body (21) to operably and seal said second vent hole (219) in an airtight manner such that said second check valve (25) is operably and upwardly driven to an opened position, where air in the container space (11) of the container body (1) is permitted to flow through said second vent hole (219), by either one of a negative pressure air applied to said connecting portion (218) by the air pumping device (4), or a positive pressure air flowing upwardly from the container space (11) through said second vent hole (219).

14. The cover mechanism (2) of claim 13, wherein said second check valve (25) has a valve disc (251) which is configured to downwardly abut against an upper surface of said connecting portion (218) and cover said second vent hole (219) in an airtight manner, a lower plate (252) which is disposed downwardly of said valve disc (251) to abut against a lower surface of said connecting portion (218), an interconnecting stem (253) which extends to interconnect said valve disc (251) and said lower plate (252) and is inserted into said second vent hole (219), and a second notched passage (254) which is formed in said lower plate (252) and said interconnecting stem (253) and in communication between said second vent hole (219) and the container space (11) of the container body (1), said valve disc (251) being deformed and flapped upwardly by means of either the negative pressure air or the positive pressure air so as to open said second vent hole (219) to communicate said second vent hole (219) with the external environment.
